# EUROPÄISCHE PATENTSCHRIFT

(11) **EP 1 423 597 B1**
(45) Veröffentlichungstag und Bekanntmachung des Hinweises auf die Patenterteilung: **19.01.2005**
(21) Anmeldenummer: 02797870.9
(22) Anmeldetag: 06.09.2002
(51) Int. Cl.: F02M 37/18, F02M 37/22

(54) **KRAFTSTOFFMODUL**
FUEL MODULE
MODULE D'ALIMENTATION EN CARBURANT

(30) Priorität: 06.09.2001 DE 10143819
(43) Veröffentlichungstag der Anmeldung: 02.06.2004
(73) Patentinhaber: SIEMENS AKTIENGESELLSCHAFT, 80333 München (DE)
(72) Erfinder: SINZ, Wolfgang, 65843 Sulzbach (DE)
(86) Internationale Anmeldenummer: PCT/DE2002/003331
(87) Internationale Veröffentlichungsnummer: WO 2003/023218

(56) Entgegenhaltungen:
- DE-A- 4 425 670
- DE-A- 19 846 616
- US-A- 4 770 150
- US-A- 5 732 684
- US-A- 5 913 294

## Beschreibung

Die Erfindung bezieht sich auf ein Kraftstoffmodul zum Zuführen von : Kraftstoff aus einem Kraftstofftank zu einer Brennkraftmaschine, mit einer Förderpumpe, durch die Kraftstoff angesaugt und in einen Behälter gefördert wird und mit einer Hauptpumpe, die aus dem Behälter Kraftstoff ansaugt und mit hohem Druck der Brennkraftmaschine zuführt, wobei die Förderpumpe eine mit einem niedrigen Druck fördernde Pumpe ist, deren Pumpenauslass über einen Feinfilter in den Behälter führt.

Bei derartigen Kraftstoffmodulen ist es bekannt, einen Feinfilter in der vom Auslass der Hauptpumpe zur Brennkraftmaschine führenden Leitung anzuordnen. Zwar werden häufig am Hauptpumpenansaugkanal auch Grobfilter angeordnet. Diese können aber nur Partikel aus dem Kraftstoff herausfiltern, die größer als etwa 40 bis 100 µm sind. Kleinere Partikel gelangen durch die Hauptpumpe und werden erst im Feinfilter herausgefiltert. Dies führt zu Problemen, wenn die beweglichen Bauteile der Hauptpumpe mit nur geringem Spiel in den feststehenden Bauteilen angeordnet sind, so dass zwischen diesen Bauteilen Spalte in der Größenordnung von nur 10 bis 20 µm vorhanden sind. Diese geringen Spalte können von den durch den Grobfilter hindurchgetretenen Schmutzpartikeln zugesetzt oder beschädigt werden, so dass die Funktion der Hauptpumpe beeinträchtigt wird.

Der Ersatz des Grobfilters am Hauptpumpenansaugkanal durch einen Feinfilter könnte nur mit Filterelementen sehr großer Dimension erfolgen, da die über die Lebensdauer eines Kraftfahrzeugs mögliche Schmutzkapazität im Bereich von mehreren Gramm vorhanden sein müsste, um noch eine ausreichende Durchströmbarkeit des Filters zu gewährleisten.

Da die Saugwirkung der Hauptpumpe relativ gering und im Bereich von nur einigen Millibar liegt, reicht bereits bei geringer Filterverschmutzung diese Saugwirkung nicht mehr aus, um ausreichend Kraftstoff in die Pumpe anzusaugen, so dass es zu einem Ausgasen des Kraftstoffs im Feinfilter und so zu Heißförderproblemen der Pumpe führt, die die Funktion der Pumpe stören oder sogar zur völligen Funktionsunfähigkeit führen.

Aus der DE-A-44 25 670 ist ein Kraftstoffmodul der eingangs genannten Art bekannt.

Aus der US-A-47 70 150 ist ein Kraftstoffmodul zum Zuführen von Kraftstoff aus einem Kraftstofftank zu einer Brennkraftmaschine bekannt, das eine Förderpumpe aufweist, durch die Kraftstoff angesaugt wird. Von der Förderpumpe wird der Kraftstoff über einen Wärmetauscher, einen Hauptfilter und einen Feinfilter zur Einspritzpumpe der Brennkraftmaschine gefördert.

Aus der DE-A-19B 46 616 ist ein Kraftstoffmodul zum Zuführen von Kraftstoff aus einem Kraftstofftank zu einer Brennkraftmaschine bekannt, das eine Förderpumpe aufweist, die über einen ersten Filter Kraftstoff ansaugt und in einen Behälter fördert. Von einer Hauptpumpe wird aus dem Behälter- über einen Feinfilter Kraftstoff angesaugt und der Brennkraftmaschine zugeführt.

Aufgabe der Erfindung ist es, ein Kraftstoffmodul der eingangs genannten Art zu schaffen, das die Verwendung von kleindimensionierten Hauptpumpen ermöglicht, deren Funktion über ihre Lebensdauer gewährleistet ist und bei dem über die Lebensdauer kein Abfall der Fördermenge des der Brennkraftmaschine zugeführten Kraftstoffs erfolgt.

Diese Aufgabe wird erfindungsgemäß dadurch gelöst, dass der Behälter ein geschlossener Behälter ist, in dem die Hautpumpe angeordnet ist.

Durch die Förderpumpe werden bei kleineren Drucken große Umwälzmengen an Kraftstoff durch den Feinfilter gefördert. Der auf den Feinfilter einwirkende Druck der Förderpumpe ist um ein vielfaches größer als ein von der Förderpumpe erzeugbarer möglicher Saugunterdruck, so dass der Feinfilter problemlos durchströmt wird. Ausgasungen des Kraftstoffs im Feinfilter führen nicht zu Heißförderproblemen in der Hauptpumpe. Der bereits feingefilterte Kraftstoff ermöglicht es, eine als Strömungspumpe ausgebildete Hauptpumpe mit geringen Spaltgrößen zwischen den beweglichen und feststehenden Teilen zu verwenden, die trotz geringer Größe den erforderlichen Hochdruck erzeugt und gegen Verschleiß durch Schmutzpartikel geschützt ist.

Ein Druckabfall durch einen in Strömungsrichtung hinter der Hauptpumpe angeordneten Feinfilter ist nicht vorhanden, so dass der von der Hauptpumpe erzeugte Druck auch voll zur Weiterförderung des Kraftstoffs aufrecht erhalten bleibt.

Durch den geschlossenen Behälter wird vermieden, dass bei zumindest weitgehend gefülltem Kraftstofftank ungefilterter Kraftstoff in den Behälter gelangen und die Funktion der Hauptpumpe beeinträchtigen kann.

Zur Vereinfachung der Montage ist die Hauptpumpe im Behälter angeordnet.

Da die Förderpmupe keine hohen Drücke erzeugen muss, kann sie als Strömungspumpe mit relativ großen SpaltgrvBen zwischen den beweglichen und feststehenden Teilen ausgebildet sein, so dass die im Kraftstoff enthaltenden Schmutzpartikel nicht die volle Funktionsfähigkeit der Förderpumpe störend beeinflussen.

Dabei kann die Förderpumpe einen Förderdruck von etwa 400 mbar bis etwa 600 mbar, vorzugsweise von etwa 500 mbar erzeugen.

Saugt die Förderpumpe über einen Filter Kraftstoff an, so ist auch diese ausreichend gegen den Verschleiß durch Schmutzpartikel geschützt.

Zur Sicherstellung einer ausreichenden Kraftstoffmenge an der Förderpumpe kann die Förderpumpe Kraftstoff aus einem Förderpumpenbehälter ansaugen, in den von einer oder mehreren Saugstrahlpumpen Kraftstoff aus dem Kraftstofftank gefördert wird.

Wird dabei von dem Pumpenauslass der Förderpumpe ein Zweigstrom des Förderstroms der oder den Saugstrahlpumpen als Betriebstrom zugeführt, so kann die Hauptpumpe ausschließlich für die der Brennkraftmaschine zuzuführende Kraftstoffmenge dimensioniert werden. Dabei kann der Zweigstrom sowohl vor als auch nach dem Feinfilter vom Förderstrom abgezweigt werden. Eine Abzweigung vor dem Feinfilter hat den vorteil einer höheren Leistung der Saugstrahlpumpe.

Damit von der Förderpumpe ein ausreichender Druck aufgebaut wird um die Saugstrahlpumpe sicher betreiben zu können, kann in dem zum Behälter führenden Pumpenauslass der Förderpumpe eine Drossel angeordnet sein, gegen deren Widerstand die Förderpumpe fördern muss, wobei vorzugsweise die Drossel in Strömungsrichtung nach dem Feinfilter in dem Pumpenauslass angeordnet ist. Der Druck an der Förderpumpe wird dann noch erhöht und führt zu einer weiteren Verbesserung der Fördertätigkeit der Saugstrahlpumpe. wenn sich der Durchflusswiderstand des Feinfilters im Laufe seiner Lebensdauer durch die herausgefilterten Schmutzpartikel erhöht.

Zu einem einfach vormontierbaren Aufbau führt es, wenn die Förderpumpe in dem Förderpumpenbehälter angeordnet ist.

In der von der Hauptpumpe zur Brennkraftmaschine führenden Förderleitung kann ein Druckregler angeordnet sein, durch den der der Brennkraftmaschine zugeführte Höchstdruck bestimmt wird.

Ist dabei die Abregelleitung des Druckreglers in den Förderpumpenbehälter geführt, muß sie nicht noch einmal von der Saugstrahlpumpe in den Förderpumpenbehälter gefördert werden und die notwendige Saugstrahlpumpenleistung kann auf den Verbrauch der Brennkraftmaschine begrenzt werden.

Saugt die Hauptpumpe über einen weiteren Filter Krafttoff aus dem Behälter an, so wird durch diesen Filter auch noch möglicher Restschmutz von der Hauptpumpe abgehalten.

Ebenfalls zur Vereinfachung der Montage kann die Hauptpumpe im Behälter angeordnet sein.

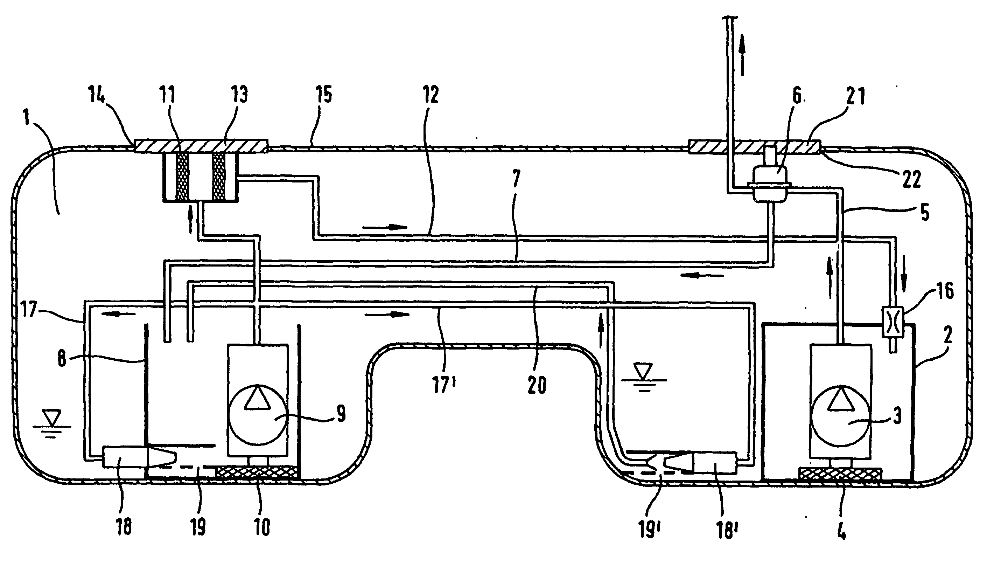

Ein Ausführungsbeispiel der Erfindung ist in der Zeichnung dargestellt und wird im folgenden näher beschrieben. Die einzige Figur der Zeichnung zeigt einen schematischen Aufbau eines Kraftstoffmoduls, das in einem Kraftstofftank eingebaut ist.

Der Kraftstofftank 1 ist ein sog. Satteltank, dessen beide Tankbereiche miteinander verbunden sind. In dem rechten Tankbereich ist in einem geschlossenen Behälter 2 eine als Strömungspumpe ausgebildete Hauptpumpe 3 angeordnet, die über einen Filter 4 geringer Filterkraft Kraftstoff aus dem Behälter 2 ansaugt und mit hohem Druck über eine Förderleitung 5 zu einer nicht dargestellten Brennkraftmaschine fördert.

In der Förderleitung 5 ist ein an einem Verschluß 21 einer Tanköffnung 22 in der oberen Wand 15 des Kraftstofftanks 1 befestigter Druckregler 6 angeordnet, dessen Abregelleitung 7 in einen im linken Tankbereich angeordneten, nach oben offenen Förderpumpenbehälter 8 geführt ist.

In dem Förderpumpenbehälter 8 ist eine als Strömungspumpe ausgebildete Förderpumpe 9 angeordnet, die über einen Filter 10 geringer Filterkraft Kraftstoff aus dem Förderpumpenbehälter 8 ansaugt und mit einem Förderdruck von etwa 500 mbar in einer Zuführleitung 12 zu dem Behälter 2 pumpt. In der Zuführleitung 12 ist in Förderrichtung zunächst ein Feinfilter 11 angeordnet, der sich an einem Verschluß 13 einer Tanköffnung 14 in der oberen Wand 15 des Kraftstofftanks 1 befindet. In Strömungsrichtung hinter dem Feinfilter 11 ist in der Zuführleitung 12 an deren Mündung in den Behälter 2 eine Drossel 16 angeordnet, die dafür sorgt, daß durch die Förderpumpe 9 in der Zuführleitung 12 ein bestimmter Druck aufgebaut wird.

Von der Zuführleitung 12 gehen vor dem Feinfilter 11 zwei Abzweigleitungen 17, 17' ab, über die Zweigströme des Förderstroms der Förderpumpe 9 zu Saugstrahlpumpen 18, 18' geführt sind und diese antreiben. Die Saugstrahlpumpen 18, 18' saugen über Saugöffnungen 19, 19' Kraftstoff aus dem Kraftstofftank 1 an und fördern ihn zusammen mit dem Kraftstoff der Zweigströme des Förderstroms der Förderpumpe 9 direkt (Saugstrahlpumpe 18) oder über eine Förderleitung 20 (Saugstrahlpumpe 18') in den Förderpumpenbehälter 8.

## Patentansprüche

1. Kraftstoffmodul zum Zuführen von Kraftstoff aus einem Kraftstofftank zu einer Brennkraftmaschine, mit einer Förderpumpe, durch die Kraftstoff angesaugt und in einen Behälter gefördert wird und mit einer Hauptpumpe, die aus dem Behälter Kraftstoff ansaugt und mit hohem Druck der Brennkraftmaschine zuführt, wobei die Förderpumpe eine mit einem niedrigen Druck fördernde Pumpe ist, deren Pumpenauslass über einen Feinfilter in den Behälter führt, **dadurch gekennzeichnet, dass** der Behälter ein geschlossener Behälter (2) ist, in dem die Hauptpumpe (1) angeordnet ist.

2. Kraftstoffmodul nach Anspruch 1, **dadurch gekennzeichnet, dass** die Förderpumpe (9) eine Strömungspumpe ist.

3. Kraftstoffmodul, nach einem der vorhergehenden Ansprüche, **dadurch gekennzeichnet, dass** die Förderpumpe (9) einen Förderdruck von etwa 400 mbar bis etwa 600 mbar erzeugt.

4. Kraftstoffmodul nach Anspruch 3, **dadurch gekennzeichnet, dass** die Förderpumpe (9) einen Förderdruck von etwa 500 mbar erzeugt.

5. Kraftstoffmodul nach einem der vorhergehenden Ansprüche, **dadurch gekennzeichnet, dass** die Förderpumpe (9) über einen Filter (10) Kraftstoff ansaugt.

6. Kraftstoffmodul nach einem der vorhergehenden Ansprüche, **dadurch gekennzeichnet, dass** die Förderpumpe (9) Kraftstoff aus einem Förderpumpenbehälter (8) ansaugt, in den von einer oder mehreren Saugstrahlpumpen (18, 18') Kraftstoff aus dem Kraftstofftank (1) gefördert wird.

7. Kraftstoffmodul nach Anspruch 6, **dadurch gekennzeichnet, dass** von dem Pumpenauslass der Förderpumpe (9) ein Zweigstrom des Förderstroms der oder den Saugstrahlpumpen (18, 18') als Betriebsstrom zugeführt ist.

8. Kraftstoffmodul nach Anspruch 7, **dadurch gekennzeichnet, dass** in dem zum Behälter (2) führenden Pumpenauslass der Förderpumpe (9) eine Drossel (16) angeordnet ist.

9. Kraftstoffmodul nach Anspruch 8, **dadurch gekennzeichnet, dass** die Drossel (16) in Strömungsrichtung nach dem Feinfilter (11) in dem Pumpenauslass angeordnet ist.

10. Kraftstoffmodul nach einem der vorhergehenden Ansprüche, **dadurch gekennzeichnet, dass** die Förderpumpe (9) in dem Förderpumpenbehälter (8) angeordnet ist.

11. Kraftstoffmodul nach einem der vorhergehenden Ansprüche, **dadurch gekennzeichnet, dass** in der von der Hauptpumpe (1) zur Brennkraftmaschine führenden Förderleitung (5) ein Druckregler (6) angeordnet ist.

12. Kraftstoffmodul nach Anspruch 11, **dadurch gekennzeichnet, dass** die Abregelleitung (7) des Druckreglers (6) in den Förderpumpenbehälter (8) geführt ist.

13. Kraftstoffmodul nach einem der vorhergehenden Ansprüche, **dadurch gekennzeichnet , dass** die Hauptpumpe (1) über einen Filter (4) Kraftstoff aus dem Behälter (2) ansaugt.

## Claims

1. Fuel module for supplying fuel from a fuel tank to an internal combustion engine, having a feed pump which is used to take up fuel and feed it into a container, and having a main pump which takes up fuel from the container and supplies it at high pressure to the internal combustion engine, the feed pump being a pump which feeds at a low pressure and the pump outlet of which leads into the container via a fine filter, **characterized in that** the container is a closed container (2) in which the main pump (1) is arranged.

2. Fuel module according to Claim 1, **characterized in that** the feed pump (9) is a flow pump.

3. Fuel module according to one of the preceding claims, **characterized in that** the feed pump (9) produces a feed pressure of approximately 400 mbar to approximately 600 mbar.

4. Fuel module according to Claim 3, **characterized in that** the feed pump (9) produces a feed pressure of approximately 500 mbar.

5. Fuel module according to one of the preceding claims, **characterized in that** the feed pump (9) takes up fuel via a filter (10).

6. Fuel module according to one of the preceding claims, **characterized in that** the feed pump (9) takes up fuel from a feed pump container (8) into which fuel is fed from the fuel tank (1) by one or more suction jet pumps (18, 18').

7. Fuel module according to Claim 6, **characterized in that** a branch flow of the feed flow is supplied from the pump outlet of the feed pump (9) to the suction jet pump or suction jet pumps (18, 18') as operating flow.

8. Fuel module according to Claim 7, **characterized in that** a restrictor (16) is arranged in the pump outlet of the feed pump (9), said outlet leading to the container (2).

9. Fuel module according to Claim 8, **characterized in that** the restrictor (16) is arranged downstream of the fine filter (11) in the direction of flow in the pump outlet.

10. Fuel module according to one of the preceding claims, **characterized in that** the feed pump (9) is arranged in the feed pump container (8).

11. Fuel module according to one of the preceding claims, **characterized in that** a pressure regulator (6) is arranged in the feed line (5) leading from the main pump (1) to the internal combustion engine.

12. Fuel module according to Claim 11, **characterized in that** the cut-off line (7) of the pressure regulator (6) is guided into the feed pump container (8).

13. Fuel module according to one of the preceding claims, **characterized in that** the main pump (1) takes up fuel from the container (2) via a filter (4).

## Revendications

1. Module d'alimentation en carburant permettant de transporter du carburant provenant d'un réservoir à carburant vers un moteur à combustion interne, comportant une pompe de circulation, qui aspire du carburant et le refoule dans un compartiment, et une pompe principale, qui aspire du carburant tiré du compartiment et l'envoie, sous une forte pression, au moteur à combustion interne, où la pompe de circulation est une pompe qui refoule avec une pression faible et dont la s ortie conduit, à travers un filtre fin, dans le compartiment, **caractérisé par le fait que** le compartiment est un compartiment fermé (2) dans lequel se trouve la pompe principale (1).

2. Module d'alimentation en carburant selon la revendication 1 **caractérisé par le fait que** la pompe de circulation (9) est une pompe à aubes.

3. Module d'alimentation en carburant selon l'une des revendications précédentes **caractérisé par le fait que** la pompe de circulation (9) produit une pression de refoulement comprise entre environ 400 mbars et environ 600 mbars.

4. Module d'alimentation en carburant selon la revendication 3 **caractérisé par le fait que** la pompe de circulation (9) produit une pression de refoulement d'environ 500 mbars.

5. Module d'alimentation en carburant selon l'une des revendications précédentes **caractérisé par le fait que** la pompe de circulation (9) aspire du carburant à travers un filtre (10).

6. Module d'alimentation en carburant selon l'une des revendications précédentes **caractérisé par le fait que** la pompe de circulation (9) aspire du carburant dans un compartiment (8) de la pompe de circulation, dans lequel du carburant provenant du réservoir à carburant (1) est refoulé par une ou plusieurs pompes à jet aspirant (18, 18').

7. Module d'alimentation en carburant selon la revendication 6 **caractérisé par le fait que**, à partir de la sortie de la pompe de circulation (9), un flux secondaire du flux d'alimentation est appliqué en tant que flux de service à la ou aux pompes à jet aspirant (18, 18').

8. Module d'alimentation en carburant selon la revendication 7 **caractérisé par le fait qu'**une vanne d'étranglement (16) est disposée dans la sortie de la pompe de circulation (9) conduisant au compartiment (2).

9. Module d'alimentation en carburant selon la revendication 8 **caractérisé par le fait que** la vanne d'étranglement (16) est disposée dans la sortie de la pompe après le filtre fin (11) dans le sens de l'écoulement.

10. Module d'alimentation en carburant selon l'une des revendications précédentes **caractérisé par le fait que** la pompe de circulation (9) est disposée dans le compartiment (8) de la pompe de circulation.

11. Module d'alimentation en carburant selon l'une des revendications précédentes **caractérisé par le fait qu'**un régulateur de pression (6) est disposé dans la conduite d'alimentation (5) qui conduit de la pompe principale (1) au moteur à combustion interne.

12. Module d'alimentation en carburant selon la revendication 11 **caractérisé par le fait que** la conduite de décompression (7) du régulateur de pression (6) conduit dans le compartiment (8) de la pompe de circulation.

13. Module d'alimentation en carburant selon l'une des revendications précédentes **caractérisé par le fait que** la pompe principale (1) aspire, à travers un filtre (4), du carburant dans le compartiment (2).
